## Europäisches Patentamt
## European Patent Office
## Office européen des brevets

(19)

(11) Veröffentlichungsnummer: **0 258 645**
**B1**

(12)

# EUROPÄISCHE PATENTSCHRIFT

(45) Veröffentlichungstag der Patentschrift:
27.09.89

(51) Int. Cl.⁴: **A01B 33/14**, A01B 33/10

(21) Anmeldenummer: **87111083.9**

(22) Anmeldetag: **31.07.87**

(54) Bodenbearbeitungsmaschine.

(30) Priorität: **29.08.86 DE 3629500**

(43) Veröffentlichungstag der Anmeldung:
**09.03.88 Patentblatt 88/10**

(45) Bekanntmachung des Hinweises auf die Patenterteilung:
**27.09.89 Patentblatt 89/39**

(84) Benannte Vertragsstaaten:
**DE FR GB NL**

(56) Entgegenhaltungen:
**EP-A- 0 211 276**
**DE-U- 8 213 540**
**FR-A- 2 090 356**
**FR-A- 2 278 232**

(73) Patentinhaber: **Amazonen-Werke H. Dreyer GmbH & Co.**
**KG, Am Amazonenwerk 9-13,**
**D-4507 Hasbergen-Gaste(DE)**

(72) Erfinder: **Gieseke, Reinhard, Eichenwall 4, D-2872 Hude**
**i.O.(DE)**

ACTORUM AG

**Beschreibung**

Die Erfindung betrifft eine Bodenbearbeitungsmaschine gemäß des Oberbegriffes des Anspruches 1.

Eine derartige Bodenbearbeitungsmaschine ist durch das DE-GM 82 13 540 bekannt. Die Werkzeuge bei dieser Bodenbearbeitungsmaschine sind jeweils mit Hilfe von zwei Schraubbolzen an dem Werkzeugkreisel befestigt. Nachteilig ist bei dieser Befestigungsart, daß relativ große und hochfeste Schraubbolzen verwendet werden müssen. Weiterhin müssen die Schraubbolzen mit sehr großen Kräften festgezogen werden, damit die Werkzeuge auch unter schwierigsten Einsatzbedingungen sicher an dem Werkzeugkreisel befestigt bleiben. Sehr aufwendig und zeitraubend ist es wenn das Werkzeug ausgewechselt werden müssen. Das Auswechseln der Werkzeuge bei der bekannten Maschine nimmt eine sehr große Zeit in Anspruch, vor allem, um die Schrauben zu lösen und wieder fest anzuziehen. Weiterhin ist es vor allem auf dem Acker bzw. für den Landwirt allein mit Hilfe von Bordwerkzeug praktisch unmöglich, Zinken auf dem Acker auszutauschen. Des weiteren ist die bekannte Bodenbe-arbeitungsmaschine nicht geeignet, auf steinrei-chen Böden eingesetzt zu werden, da die Zinken nicht elastisch ausweichen können.

Der Erfindung liegt die Aufgabe zugrunde, auf einfache Weise eine große elastische Ausweichmöglichkeit für die Zinken beim Auftreffen auf den im Boden festsitzenden Hindernissen zu schaffen.

Diese Aufgabe wird erfindungsgemäß durch das Kennzeichen des Patentanspruches 1 gelöst. Infolge dieser Maßnahme wird erreicht, daß das Befestigungsteil sich über einen gewissen Bereich seiner Länge innerhalb der Aufnahmeöffnung um eine senkrecht zu der Drehachse des Werkzeugkreisels liegende Achse um einen gewissen Bereich elastisch verdrehen kann. Dieses ist vor allem von Bedeutung, wenn das Bodenbearbeitungswerkzeug auf im Boden sich befindliche bzw. festsitzende Steine trifft, so daß das Bodenbearbeitungswerkzeug um einen gewissen Bereich nach hinten ausweichen kann, indem das Befestigungsteil sich wie eine Torsionsfeder innerhalb der Aufnahmeöffnung verdrehen kann.

Eine weitere zusätzliche Verbesserung der elastischen Ausweichmöglichkeit für die Zinken wird dadurch erreicht, daß die Aufnahmeöffnung in dem äußeren Bereich von der Mitte der Aufnahmeöffnung in tangentialer Richtung gesehen eine zunehmende größere Breite als die Befestigungsteile der Werkzeuge aufweist, und daß dieser sich erwei-ternde Bereich der Aufnahmeöffnung mit dem sich seitlich nach außen verjüngenden Bereich des Be-festigungsteiles des Werkzeuges zumindest annä-hernd deckt. Hierdurch ergibt sich eine derart große Ausweichmöglichkeit der Zinken entgegen der Drehrichtung beim Auftreffen auf im Boden festsetzenden Hindernissen, daß selbst unter schwierigsten Bedingungen keine Beschädigungen an der Maschine auftreten.

Weitere Einzelheiten sind den übrigen Unteransprüchen, der Beispielsbeschreibung und den Zeichnungen zu entnehmen. Hierbei zeigen

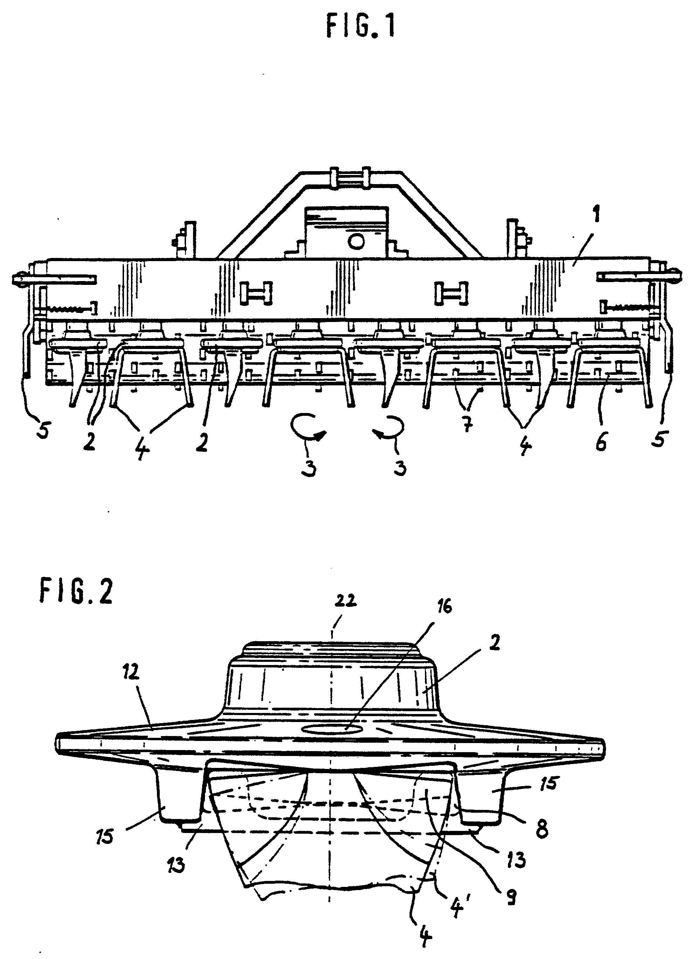

Fig. 1 eine erfindungsgemäß ausgebildete Bodenbearbeitungsmaschine mit einer hinter der Bodenbearbeitungsmaschine angeordneten Nachlaufwalze in der Vorderansicht,

Fig. 2 das Oberteil eines Werkzeugkreiseles mit einem Bodenbearbeitungszinken in der Seitenansicht,

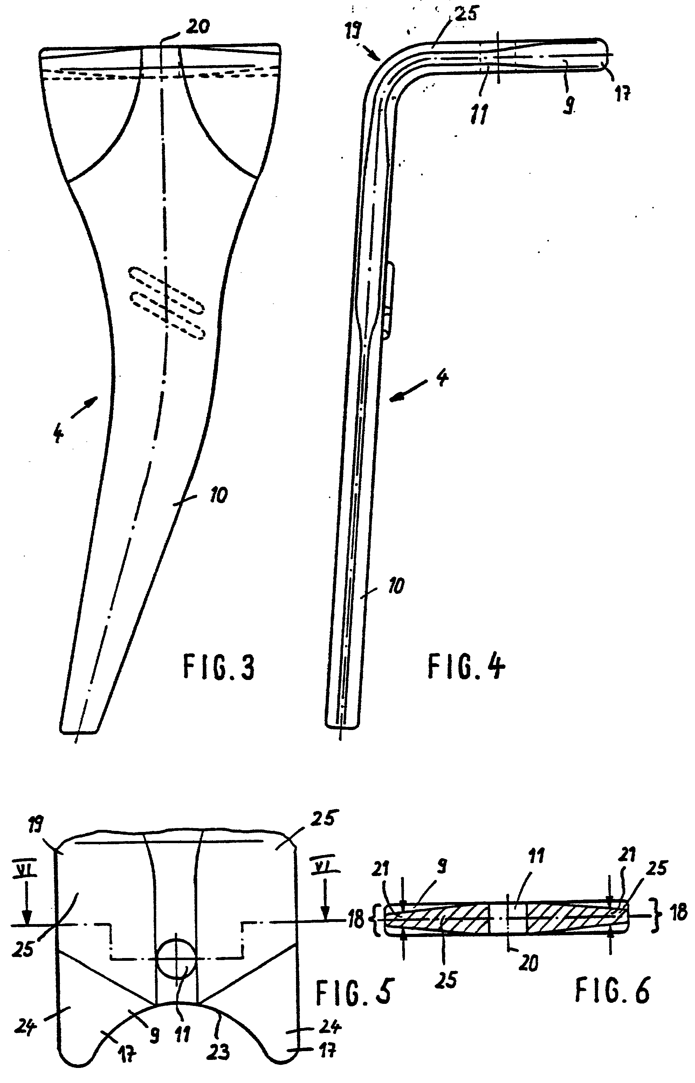

Fig. 3 einen Bodenbearbeitungszinken in der Seitenansicht,

Fig. 4 den Zinken in der Ansicht von hinten,

Fig. 5 das Befestigungsteil des Zinkens in der Draufsicht und

Fig. 6 eine Ansicht des Befestigungsteiles des Zinkens gemäß dem Schnitt VI-VI.

Die Bodenbearbeitungsmaschine weist das Gestell 1 auf, in welchem in einer quer zur Fahrtrichtung verlaufenden Reihe nebeneinander die Werkzeugkreisel 2 angeordnet sind. Die Werkzeugkreisel 2 werden von der Zapfwelle des die Bodenbearbeitungsmaschine ziehenden Schleppers angetrieben, wobei die jeweils einander benachbarten Werkzeugkreisel 2 im entgegengesetzten, durch den Pfeil 3 gekennzeichneten Drehsinn um aufrechte Achsen rotierend angetrieben werden. Die Werkzeugkreisel 2 sind tellerförmig ausgebildet. An diesen Werkzeugkreiseln 2 sind die nach unten ragenden als Zinken ausgebildeten Bodenbearbeitungswerkzeuge 4 befestigt. Seitlich neben den jeweils äußeren Werkzeugkreiseln 2 ist ein Sei-tenblech 5 angeordnet, welches jeweils die Verlagerung der Erde nach außen begrenzt. Hinter der Bodenbearbeitungsmaschine ist die als Packerwalze 6 ausgebildete Nachlaufwalze mit auf ihrem Umfang angeordneten Zacken 7 angeordnet.

Die Werkzeugkreisel 2 weisen radial nach außen gerichtete Aufnahmeöffnungen 8 für das jeweilige Befestigungsteil 9 der Zinken 4 auf. Die Zinken 4 weisen jeweils das Bearbeitungsteil 10, welches den Boden bearbeitet und ein rechtwinkliges zu dem Bo-denbearbeitungsteil 10 abgewinkeltes Bodenbefesti-gungsteil 9 auf. Dieses Befestigungsteil 9 weist eine Bohrung 11 auf.

Jeder Werkzeugkreisel 2 besteht aus dem oberen Schmiedeteil 12, welches eine zentrale Bohrung zur Befestigung an einer Antriebswelle der nicht dargestellten Getriebe, welche in dem Gestell 1 angeordnet sind, aufweist, und aus der an dem Schmiedeteil 12 angeschweißten Bodenplatte 13. Auf der Unterseite des Schmiedeteiles 12 der Werkzeugkreisel 2 sind jeweils zur Bildung der Aufnahmeöffnung 8 die nach unten gerichteten Stege 15 an dem Schmiedeteil 12 einstückig angeordnet. Auf der Unterseite der Stege 15 ist die die Stege jeweils miteinander verbindende Platte 13 aufgeschweißt. Die Platte 13 weist in ihrer Mitte eine große zentrale Bohrung auf, so daß innerhalb dieser zentralen Bohrung das Befestigungselement zur Sicherung des Werkzeugkreisels 2 auf der Antriebswelle des Werkzeugkreisels angeordnet werden kann. Weiterhin weist diese Platte im Bereich jeder Aufnahmeöffnung die Bohrung 16 auf, die mit der jeweiligen Bohrung, die in dem Schmiedeteil 12 im Bereich der Aufnahmeöffnung 8 angeordnet ist, fluchtet. Weiterhin fluchtet diese Bohrung 16 mit der jeweiligen Bohrung 11 in dem Befestigungsteil 9 der Werkzeuge 4, wenn das Befestigungsteil 9 der Werkzeuge 4 in diese Aufnahmeöffnung gesteckt ist. Das Befestigungsteil 9 des Zinkens 4 wird dann mit einem Bolzen gesichert, der durch die Bohrungen 11 und 16 gesteckt ist.

Das Befestigungsteile 9 weist an seinem freien Ende 17 eine zumindest etwa dem Querschnitt der Aufnahmeöffnung 8 entsprechenden Querschnitt 18 bzw. Höhe 18 auf. Des weiteren weist das Befestigungsteil 9 des Zinkens 4 auf der dem Befestigungsteil 10 zugewandten Seite 19 von der Mitte 20 des Befestigungsteiles 9 die seitliche nach außen abnehmende Höhe 21 auf.

Das heißt, daß die Ober- und Unterseite des Befestigungsteiles seitlich nach außen aufeinander zulaufen. Somit ergibt sich also ein trapezförmiger Querschnitt für diesen Teil des Befestigungsteiles.

Die Aufnahmeöffnungen 8 weisen einen größeren Querschnitt als das Befestigungsteil 9 des Zinkens 4 auf. Somit sind die in diesen Aufnahmeöffnungen 8 angeordneten Befestigungsteile 9 der Zinken 4 mit einem gewissen Spiel angeordnet, so daß die Zinken 4 leicht lösbar in diesen Aufnahmeöffnungen angeordnet sind. Die Befestigungsteile 9 der Werkzeuge werden durch die durch die Bohrungen 11 und 16 gesteckten Bolzen leicht lösbar in der Aufnahmeöffnung der Werkzeugkreisel 2 gehalten. Die Bolzen sind mittels der als Splinte ausgebildeten Schnellverschlüsse in den Bohrungen des Werkzeugkreisels 2 gesichert.

Die Aufnahmeöffnung 8 weist in ihrem äußeren radialen Bereich von der Mitte 22 der Aufnahmeöffnung 8 in tangentialer Richtung gesehen eine wesentlich größere Höhe der Befestigungsteile 9 der Zinken 4 auf. Die Aufnahmeöffnung 8 in den Werkzeugkreiseln 2 für die Befestigungsteile 8 erstrecken sich jeweils bis zur Mitte des Werkzeugkreisels 2 und die Befestigungsteile 9 der Zinken 4 ragen ebenfalls bis zur Mitte der Werkzeugkreisel 2 in die Aufnahmeöffnung 8 hinein. Hierzu weist das Befestigungsteil auf seiner dem Bodenbearbeitungsteil 10 abgewandten Seite die Aussparung 23 auf, die der Kontur der Nabe des Werkzeugkreisels 2 entspricht. Die durch die Aussparung 23 entstandenen Zungen 24 des Befestigungsteiles 9 erstrecken sich seitlich der Nabe bis zur Mitte des Werkzeugkreisels 2. Der größere äußere Querschnitt der Aufnahmeöffnung 8 erstreckt sich über etwa die halbe Länge der Aufnahmeöffnung 8 oder des Befestigungsteiles 9. Ebenfalls erstreckt sich der eine abnehmende Höhe aufweisende Teil 25 etwa zumindest über die halbe Länge des Befestigungsteiles 9. Somit deckt sich der erweiternde Bereich der Aufnahmeöffnung 8 mit dem sich seitlich nach außen verjüngenden Bereich 25 des Befestigungsteiles 9 des Zinkens 4.

Wenn nun der Zinken 4 auf ein im Boden festsitzendes Hindernis auftrifft, so kann der Zinken 4 aus seiner mit durchzogenen Linien dargestellten Position entgegen der Drehrichtung elastisch nach hinten in die mit strichpunktierten Linien wiedergegebene Stellung 4' schwenken. Das elastische Nachhintenschwenken des Bearbeitungsteiles 10 des Zinkens 4 wird durch die im radialen äußeren Bereich eine x-förmige Ausbildung aufweisende Aufnahmeöffnung 8 und zusätzlich durch die im äußeren Bereich einen sich verjüngenden Querschnitt aufweisenden Befestigungsteil 25 erreicht. Das Befestigungsteil 9 kann sich also im Bereich des sich verjüngenden Querschnittsteiles des Befestigungsteiles 9 in dem x-förmigen Teil der Aufnahmeöffnung 8 in sich federnd verdrehen, so daß der Bearbeitungsteil 10 des Zinkens 4 in die mit strichpunktierten Linien dargestellte Position 4' schwenken kann.

## Patentansprüche

1. Bodenbearbeitungsmaschine mit mehreren in einer quer zur Fahrtrichtung verlaufenden Reihe nebeneinander angeordneten Werkzeugkreiseln (2), die nach unten gerichtete Bodenbearbeitungswerkzeuge (4) aufweisen, wobei die Werkzeugkreisel ein rechtwinklig zum Bearbeitungsteil (10) abgewinkeltes Befestigungsteil (9) aufweisen, welches mittels Bolzen an dem jeweiligen Werkzeugkreisel befestigt ist, dadurch gekennzeichnet, daß die Werkzeugkreisel (2) etwa radial nach außen weisende Aufnahmeöffnungen (8) für das jeweilige Befestigungsteil (9) des Werkzeuges (4) aufweisen, daß das Befestigungsteil (9) an seinem freien Ende (17) einen zumindest etwa dem Querschnitt der Aufnahmeöffnung (8) entsprechenden Querschnitt (18) aufweist, daß das Befestigungsteil (9) des Werkzeuges (4) auf der dem Bearbeitungsteil (10) zugewandten Seite (19) eine von der Mitte (20) des Befestigungsteiles (9) seitlich nach außen abnehmende Höhe (21) aufweist.

2. Bodenbearbeitungsmaschine nach Anspruch 1, dadurch gekennzeichnet, daß der eine abnehmende Höhe aufweisende Teil (25) des Befestigungsteiles (9) des Werkzeuges (4) sich zumindest über die halbe Länge des Befestigungsteiles (9) erstreckt.

3. Bodenbearbeitungsmaschine nach Anspruch 1, dadurch gekennzeichnet, daß die Aufnahmeöffnung (8) in dem äußeren radialen Bereich von der Mitte (22) der Aufnahmeöffnung (8) in tangentialer Richtung gesehen eine zunehmende größere Höhe als die Befestigungsteile (9) der Werkzeuge (4) aufweist, und daß sich dieser erweiternde Bereich der Aufnahmeöffnung (8) mit dem sich seitlich nach außen verjüngenden Bereich (25) des Befestigungsteiles (9) des Werkzeuges (4) zumindest annähernd deckt.

4. Bodenbearbeitungsmaschine nach Anspruch 1, dadurch gekennzeichnet, daß für jedes Werkzeug (4) zur Befestigung ein Bolzen vorgesehen ist, und daß die von dem Bolzen durchsetzte Bohrung (11) im Befestigungsteil (9) etwa in der Mitte des Befestigungsteiles (9) angebracht ist.

## Claims

1. Ground cultivating machine, having a plurality of tool rotors (2), which are disposed adjacent one another in a line extending transversely relative to the direction of travel and which include downwardly directed ground cultivating tools (4), wherein the tool rotors include a securing portion (9), which is angled at right angles to the cultivating member (10) and which is mounted on the respective tool rotor by means of bolts, characterised in that the tool rotors (2) include receiving apertures (8), which are provided to accommodate the respective securing portion (9) of the tool (4) and are orientated substantially radially outwardly, in that the securing portion (9) has, at its free end (17), a cross-section (18) which corresponds, at least substantially, to the cross-section of the receiving aperture (8), and in that the securing portion (9) of the tool (4) has, on the side (19) facing the cultivating member (10), a height (21) which decreases laterally outwardly from the centre (20) of the securing portion (9).

2. Ground cultivating machine according to claim 1, characterised in that the region (25), of decreasing height, of the securing poriton (9) of the tool (4) extends over at least half the length of the securing portion (9).

3. Ground cultivating machine according to claim 1, characterised in that the receiving aperture (8), in the external, radial region extending from the centre (22) of the receiving aperture (8), when viewed with respect to the tangential direction, has an increasing, greater height than the securing portions (9) of the tools (4), and in that this widening region of the receiving aperture (8) is covered, at least approximately, by the laterally outwardly tapering region (25) of the securing portion (9) of the tool (4).

4. Ground cultivating machine according to claim 1, characterised in that a bolt is provided for each tool (4) for securing purposes, and in that the bore (11), which is provided in the securing portion (9) and has the bolt extending therethrough, is situated substantially in the centre of the securing portion (9).

**Revendications**

1°) Machine pour le travail du sol comportant plusieurs rotors porte-outils (2) juxtaposés dans une rangée transversale à la direction de déplacement de la machine, rotors qui comportent des outils de travail du sol (4) dirigés vers le bas, les outils ayant une partie (9) courbée à l'équerre par rapport à la partie de travail (10), partie (9) qui est fixée par un goujon sur le rotor porte-outils respectif, machine caractérisée en ce que les rotors porte-outils (2) ont des logements (8) dirigés sensiblement radialement vers l'extérieur pour recevoir la partie de fixation (9) respective de l'outil (4), la partie de fixation (9) ayant à son autre extrémité (17) une section (18) correspondant au moins sensiblement à la section du logement (8), la partie de fixation (9) de l'outil (4) ayant sur son côté (19) tourné vers la partie de travail du sol (10), une hauteur (21) allant en diminuant vers l'extérieur, latéralement par rapport au milieu (20) de la partie de fixation (9).

2°) Machine pour le travail du sol selon la revendication 1, caractérisée en ce que la partie (25) de la partie de fixation (9) de l'outil (4) qui présente une hauteur allant en diminuant, s'étend au moins sur la moitié de la longueur de la partie de fixation (9).

3°) Machine pour le travail du sol selon la revendication 1, caractérisée en ce que le logement (8) présente dans sa zone radialement à l'extérieur, et vue dans la direction tangentielle, une hauteur croissante à partir du milieu du logement (8), supérieure à la partie de fixation (9) de l'outil (4) et cette zone du logement (8) qui va en s'élargissant coïncide au moins partiellement avec la zone (25) de la partie de fixation (9) de l'outil (4) qui va en diminuant latéralement vers l'extérieur.

4°) Machine pour le travail du sol selon la revendication 1, caractérisée en ce que pour chaque outil (4), il est prévu un goujon de fixation et le perçage (11) traversé par le goujon dans la partie de fixation (9) est prévu sensiblement au milieu de la partie de fixation (9).

# FIG.1

# FIG.2

EP 0 258 645 B1

FIG.3

FIG.4

FIG.5

FIG.6